# EUROPÄISCHE PATENTANMELDUNG

(11) **EP 1 884 812 A1**
(43) Veröffentlichungstag der Anmeldung: **06.02.2008**
(21) Anmeldenummer: 07111924.2
(22) Anmeldetag: 06.07.2007
(51) Int. Cl.: G02B 6/44, H02G 15/113

(54) **Kabelverbindungseinrichtung**

(30) Priorität: 01.08.2006 DE 202006011780 U
(71) Anmelder: SETOLITE Lichttechnik GmbH, 42929 Wermelskirchen (DE)
(72) Erfinder: Schultz, Peter, 42929 Wermelskirchen (DE)
(74) Vertreter: von Kirschbaum, Alexander

(57) **Zusammenfassung**

Eine Kabelverbindungseinrichtung für biegeempfindliche Kabel wie Lichtwellenleiter weist eine biegbare rohrförmige Hülse (22) auf. Mittels der Hulse (22) werden zur Reparatur miteinander verbundene Fasern (12) der Kabelenden (20) umhüllt, Ferner weist die Kabelverbindungseinrichtung zwei Verbindungselemente (24) zum Verbinden jeweils eines Hülsenendes mit jeweils einem der Kabelenden (20) auf. Die Hülse (22) bildet einen Aufnahmehohlraum (30) aus, in dem eine dauerelastische Gussmasse angeordnet ist. Hierdurch ist das Kabel auch in repariertem Zustand weiterhin trommelfähig.

## Beschreibung

Die Erfindung betrifft eine Kabelverbindungseinrichtung für biegeempfindliche Kabel, wie Lichtwellenleiter, Glasfaserkabel und dergleichen

Da derartige Kabel biegeempfindlich sind, d. h. nur einen relativ geringen Biegeradius aufweisen dürfen, um Beschädigungen zu vermeiden, treten häufig Beschädigungen auf. Mit Beschädigungen muss insbesondere gerechnet werden, wenn derartige Kabel häufiger montiert und demontiert werden. Dies ist beispielsweise bei mobilen Einsätzen, im militärischen Bereich, bei technischen Hilfeleistungen und dergleichen der Fall. Hierbei werden die Kabel auf Trommeln mit entsprechend großem Durchmesser zum Transport auf- und abgewickelt.

Eine Kabelverbindungseinrichtung für Lichtwellenleiter ist beispielsweise in DE 41 26 464 beschrieben. Hierbei werden die miteinander verbundenen Fasern zweier Kabelenden mit zwei Verbindungsspiralen umgeben, die mit den Kabelenden fest verbunden sind. Es handelt sich hierbei um eine aufwendige und steife Verbindung der beiden Kabelenden. Ein mit einer derartigen Kabelverbindungseinrichtung bzw. Muffe verbundenes Kabel ist nicht trommelfähig. Auf Grund der Steifigkeit der Muffe würden beim Aufwickeln auf eine Trommel im Bereich der Verbindung Beschädigungen auftreten. Insbesondere im Übergangsbereich zwischen dem Kabel und der Muffe treten beim Aufwickeln erhebliche Kräfte auf die zur Beschädigung, insbesondere zu einem Bruch der Fasern führen können.

Aufgabe der Erfindung ist es, eine Kabelverbindungseinrichtung für biegeempfindliche Kabel zu schaffen, die derart ausgebildet ist, dass die Kabel trommelfähig bleiben.

Die Lösung der Aufgabe erfolgt erfindungsgemäße durch die Merkmale des Anspruchs 1.

Die erfindungsgemäße Kabelverbindungseinrichtung für biegeempfindliche Kabel wie Lichtwellenleiter, Glasfaserkabel und dergleichen, weist eine Hülse auf. Die Hülse ist rohrförmig ausgebildet und erfindungsgemäß aus einem biegbaren bzw. elastischem Material hergestellt. Die Hülse umgibt die beispielsweise zur Reparatur miteinander verbundenen Fasern und ist mit den beiden Kabelenden verbunden. Hierzu sind zwei Verbindungselemente vorgesehen, die jeweils ein Hülsenende mit jeweils einem der Kabelenden verbinden. Erfindungsgemäß ist der in der Hülse verbleibende Hohlraum mit einer dauerelastischen Gussmasse ausgefüllt. Die in der Hülse angeordnete, insbesondere eingespritzte dauerelastische Gussmasse dient zur Lagefixierung der Fasern innerhalb der Hülse. Ferner wird die Lage der Hülse fixiert und somit ein ungewolltes Verschieben der Hülse vermieden. Da sowohl die Hülse als auch die Gussmasse verformbar ist, bleibt die Trommelfähigkeit des Kabels erhalten.

Insbesondere entspricht die Biegbarkeit der Kabelverbindungseinrichtung im wesentlichen der Biegbarkeit des unverletzten Kabels. Hierdurch ist sichergestellt, dass beim Biegen des Kabels, insbesondere beim Aufwickeln des Kabels auf die Kabeltrommel, ein Beschädigen des Kabels im Übergangsbereich vermieden ist. Vorzugsweise ist die Kabelverbindungseinrichtung etwas biegbarer als das unbeschädigte Kabel.

Die Gussmasse, die in bevorzugter Ausführungsform in die Hülse eingespritzt wird, ist vorzugsweise nicht elektrisch leitend und kann kein Wasser aufnehmen. Insbesondere handelt es sich um ein PU-Material, das unmittelbar vor dem Einbringen in die Hülse mit einem Härter vermischt wird. Das Einspritzen in die Hülse kann dadurch erfolgen, dass eines der Verbindungselemente zunächst noch nicht mit der Hülse verbunden wird, so dass über diese Öffnung das Zuführen der Gussmasse erfolgen kann. Nach dem Einfüllen, bzw. dem Einspritzen der Gussmasse wird das zweite Verbindungselement sodann mit der Hülse und dem Kabelende verbunden.

Bei der Hülse handelt es sich vorzugsweise um eine rohrförmiges Element, das über die gesamte Länge den gleichen Durchmesser aufweist. Die Verbindungselemente sind vorzugsweise scheibenförmig ausgebildet und insbesondere aus einem elastischen Kunststoff hergestellt. Da der Innendurchmesser der Hülse größer ist als der Außendurchmesser der Kabel, werden die scheibenförmig insbesondere ringförmigen Verbindungselemente auf die Kabel aufgesteckt. Auf Grund der bevorzugten Elastizität der Verbindungselemente dichten diese gegenüber dem Kabel ab.

Die Enden der Hülse weisen vorzugsweise Ansätze auf, die in Nuten bzw. Vertiefungen der Verbindungselemente eingreifen, um ein sicheres Verbinden der Hülse mit den Verbindungselementen zu gewährleisten. Vorzugsweise sind die Ansätze ringförmig ausgebildet und weisen nach innen. Entsprechend weisen die Verbindungselemente eine ringförmige Nut an der Außenseite auf. Auf Grund der rotationssymmetrischen Ausgestaltung ist die Montage vereinfacht. Besonders bevorzugt ist es, als Hülse ein Rohr mit wellenförmigem Wand-Querschnitt zu verwender. Die Ansätze zur Verbindung mit den Verbindungselementen sind hierbei durch die beiden äußeren Wellen gebildet.

Vorzugsweise weist die Kabelverbindungseinrichtung eine Zugentlastungseinrichtung auf, um ein Beschädigen der verbunden Fasern zu vermeiden. Die Zugentlastung kann innerhalb oder außerhalb der Hülse vorgesehen sein. Bei einer innerhalb der Hülse vorgesehenen Zugentlastungseinrichtung ist es besonders bevorzugt, eine in dem Kabel vorhandene Armierung hierzu zu nutzen, Ebenso ist es möglich, eine gesonderte Zugentlastung mit den Kabelenden zu verbinden. Dies kann über entsprechende Klemmeinrichtungen oder dergleichen erfolgen. Entsprechende Zugbelastungseinrichtungen, die über Klemmeinrichtungen oder dergleichen mit den Kabelenden verbunden sind, können auch außerhalb der Hülse angeordnet sein. Die Zugentlastungseinrichtung wird hierbei derart angeordnet oder ausgebildet, dass keine Zugkräfte auf die Fasern wirken.

Vorzugsweise kann die Hülse, sowie auch die Verbindungselemente zusätzlich mit einer Schutzhülle wie einem Schutzschlauch umgeben werden. Hierdurch ist das Eindringen von Feuchtigkeit zusätzlich vermieden. Besonders bevorzugt ist es, als Schutzhülle einen Schrumpfschlauch zu verwenden.

Bei einer besonders bevorzugten Weiterbildung der Erfindung ist die Hülse mehrteilig, insbesondere zweiteilig ausgebildet. Vorzugsweise weist die Hülse zwei Halbschalen auf, die vorzugsweise jeweils einen halbkreisförmigen Querschnitt aufweisen. Hierbei können die beiden Schalen der Hülse über ein oder mehreren Filmgelenke miteinander verbunden sein, so dass die beiden Schalen auf einfache Weise verschlossen werden können. Hierbei kann insbesondere den Filmgelenken gegenüber liegend eine Verschlusseinrichtung vorgesehen sein. Hierbei handelt es sich in besonders bevorzugter Ausführungsform um Rastelemente, so dass ein Verschließen der beiden Halbschalen durch einfaches Zusammendrücken möglich ist. Entsprechend der vorstehend beschriebenen Ausführungsformen ist es auch bei einer mehrteiligen Hülse bevorzugt, dass die Kabel länger als die Zugentlastungseinrichtungen sind, um das Auftreten von Zugkräften auf die Kabel zu verhindern. Die aus mehreren Teilen zusammengesetzte Hülse ist vorzugsweise wie vorstehend ausgeführt weitergebildet. Insbesondere erfolgt ebenfalls ein Befüllen bzw. Vergießen der Hülse mit einer Vergussmasse.

Nachfolgend wird die Erfindung anhand einer bevorzugten Ausführungsform unter Bezugnahme auf die anliegende Zeichnung näher erläutert.

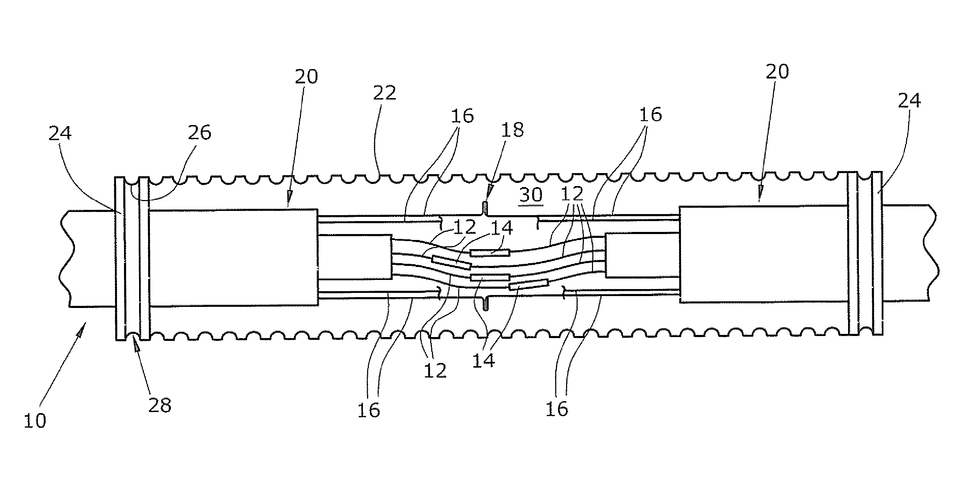

Die Figur zeigt einen schematischen Längsschnitt der Kabelverbindungseinrichtung.

Im dargestellten Ausführungsbeispiel ist ein Glasfaserkabel 10 dargestellt, das vier Glasfasern 12 aufweist. Die beschädigten Glasfasern 12 werden über Verbindungselemente 14 miteinander verbunden. Bei den Verbindungselementen 14 handelt es sich um bekannte Verbindungselemente zur Verbindung von Glasfasern. Je nach Art der Fasern kann ggf auch ein Verbinden durch Verkleben, Verschweißen oder dergleichen erfolgen. Die Verbindungselemente 14 können zum Schutz noch mit einer Ummantelung umgeben werden.

Vor dem Verbinden der Glasfasern 12 müssen diese freigelegt werden. Hierzu wird ein in dem Kabel 10 angeordnetes Edelstahlrohr oder eine andere Schutzeinrichtung in diesem Bereich entfernt. Die einzelnen Glasfasern werden, um spätere Verletzungen zu vermeiden mit einer Schutzhulle oder einem Schutzschlauch umgeben.

Das Kabel 10 weist zur Zugentlastung Stahlarmierungen 16, bei denen es sich um gleichmäßig um den Umfang verteilt angeordnete Stahldrähte handelt, auf. Diese müssen zum Reparieren der Glasfasern 12 zunächst geöffnet werden. Anschließend werden die einzelnen Armierungen 16 wieder miteinander verbunden und dienen als Zugentlastungseinrichtung im Bereich der reparierten Glasfasern 12. Zum Verbinden der Stahlarmierungen 16 werden deren Enden in einem Bereich 18 miteinander verquetscht. Hierbei muss darauf geachtet werden, dass die Zugentlastungseinrichtung, d. h. die Armierungen 16 kürzer als die reparierten Glasfasern 12 sind, um sicherzustellen, dass keine Zugkräfte auf die Glasfasern wirken. Bei Kabeln 10, die eine Stahlarmierung 16 zur Zugentlastung nicht aufweisen, ist es bevorzugt eine Zugentlastung vorzusehen, die mit den beiden Enden 20 des Kabels 10 beispielsweise durch Verklemmen, Verschmelzen oder dergleichen verbunden sind.

Über die Reparaturstelle wird nun die Hülse 22 geschoben, Die Hülse 22 ist über Verbindungselemente 24 mit den einander gegenüberliegenden Enden 20 des Kabels 10 verbunden. Selbstverständlich kann die Hülse 22 sowie auch die Verbindungselemente 24, insbesondere bei längeren Kabeln vor dem Verbinden der zur reparierenden Fasern 12 über eine der beiden Enden geschoben werden, so dass anschließend nur ein Verschieben der Hülse 22 zusammen mit den Verbindungselementen 24 über die Reparaturstelle notwendig ist.

Bei den Verbindungselementen 24 handelt es sich im dargestellten Ausführungsbeispiel um scheiben- bzw. ringförmige Kunststoffelemente, die eine innere kreisrunde Öffnung aufweisen, durch die das Kabel 10 gesteckt wird. Die Verbindungselemente 24 weisen an ihrer Außenseite eine umlaufende ringförmige Nut 26 auf. Die Hülse 22 weist eine wellenförmige Wandung auf, wobei es sich im dargestellten Ausführungsbeispiel um ringförmige Wellen und nicht um einen spiralförmigen Verlauf einer Welle handelt. Die äußersten Wellen 28 ragen in die Nuten 26 und dienen zur Verbindung der Hülse 22 mit den Verbindungselementen 24. Auf Grund der Elastizität der Hülse 22 kann diese auf das Verbindungselement 24 aufgesteckt werden, wobei die äußere Welle 28 sodann in die Nut 26 einrastet. Da die Hülse einen deutlich größeren Durchmesser als das Kabel 10 aufweist, ist ein Hohlraum bzw. Aufnahmeraum 30 ausgebildet. Der Aufnahmeraum 30 wird mit dauerelastischer Gussmasse verfüllt. Vorzugsweise wird die Gussmasse in den Aufnahmeraum 30 eingespritzt. Dies erfolgt vorzugsweise dadurch, dass eines der Verbindungselemente 24 noch nicht mit der Hülse verbunden ist, so dass eine Öffnung zwischen der Hülse 22 und dem Kabel 10 vorhanden ist. Vorzugsweise ist die Verbindungseinrichtung während des Verfüllens senkrecht, mit nach oben weisender Öffnung angeordnet. Nach dem Verfüllen wird die Öffnung durch ein entsprechendes Verschieben des Verbindungselements 24 geschlossen, wobei die äußerste Welle 28 in die Nut 26 einrastet.

Bei der Gussmasse handelt es sich vorzugsweise um ein zwei Komponenten Material, wie beispielsweise einem PU-Material und Härter. Die beiden Materialien werden unmittelbar vor dem Eindringen in den Aufnahmeraum 30 miteinander verbunden und härten sodann ggf. unter Zufuhr von Wärme aus, wobei ein dauerelastisches Material entsteht.

Sowohl die Muffe 22 als auch die beiden Verbindungselemente 24 können anschließend mit einer Schutzhülle, wie einem Schrumpfschlauch umgegeben werden.

## Patentansprüche

1. Kabelverbindungseinrichtung für biegeempfindliche Kabel, insbesondere Lichtwellenleiter, mit
einer biegbaren rohrförmigen Hülse (22) zum Umfüllen von miteinander verbundenen Fasern (12) zweier Kabelenden (20),
zwei Verbindungselementen (24) zum Verbinden jeweils eines Hulsenendes mit jeweils einem der Kabelenden (20) und
in der Hulse (22) angeordneter dauerelastischer Gussmasse.

2. Kabelverbindungseinrichtung nach Anspruch 1, **dadurch gekennzeichnet, dass** die Gussmasse in einem durch die Hülse (22) gebildetem Aufnahmehohfraurn (30) angeordnet, insbesondere eingespritzt ist.

3. Kabelverbindungseinrichtung nach Anspruch 1 oder 2, **dadurch gekennzeichnet, dass** die Verbindungselemente (24) scheibenförmig ausgebildet sind.

4. Kabelverbindungseinrichtung nach einem der Ansprüche 1 bis 3, **dadurch gekennzeichnet, dass** die Verbindungselemente (24) aus elastischem Kunststoff hergestellt sind.

5. Kabelverbindungseinrichtung nach einem der Ansprüche 1 bis 4, **dadurch gekennzeichnet, dass** die Hülsenenden nach innen weisende ringförmige Ansätze (28) aufweisen, die in ringförmige Nuten (26) eingreifen, die an der Außenseite der Verbindungselemente (24) vorgesehen sind.

6. Kabelverbindungseinrichtung nach Anspruch 5, **dadurch gekennzeichnet, dass** die Hülse (22) über die gesamte Länge einen wellenförmigen Wandquerschnitt aufweist, wobei die Ansätze (28) durch Wellen ausgebildet sind.

7. Kabelverbindungseinrichtung nach einem der Ansprüche 1 bis 6, **gekennzeichnet durch** eine die beiden Kabelenden (20) miteinander verbindende Zugentlastungseinrichtung (16).

8. Kabelverbindungseinrichtung nach Anspruch 7, **dadurch gekennzeichnet, dass** die Zugentlastungseinrichtung (16) innerhalb der Hülse (22) angeordnet ist.

9. Kabelverbindungseinrichtung nach einem der Ansprüche 1 bis 8, **gekennzeichnet durch** eine die Hülse (22) und die Verbindungselemente (24) abdichtend umgebende Schutzhülle.

10. Kabelverbindungseinrichtung nach einem der Ansprüche 1 bis 9, **dadurch gekennzeichnet, dass** die Hülse (22) mehrteilig ist, insbesondere zwei Hülsenschalen aufweist.

11. Kabelverbindungseinrichtung nach Anspruch 10, **dadurch gekennzeichnet, dass** die Hülsenschalen gelenkig, vorzugsweise über Filmgelenke miteinander verbunden sind.
